(19) Europäisches Patentamt
European Patent Office
Office européen des brevets

(11) Publication number: **0 460 434 B1**

(12) # EUROPEAN PATENT SPECIFICATION

(45) Date of publication of patent specification: **22.11.95**

(51) Int. Cl.⁶: **C09K 19/02**, C09K 19/30, C09K 19/44, C09K 19/34

(21) Application number: **91107917.6**

(22) Date of filing: **16.05.91**

The file contains technical information submitted after the application was filed and not included in this specification

(54) **Liquid crystal medium.**

(30) Priority: **08.06.90 GB 9012751**

(43) Date of publication of application:
**11.12.91 Bulletin 91/50**

(45) Publication of the grant of the patent:
**22.11.95 Bulletin 95/47**

(84) Designated Contracting States:
**DE GB**

(56) References cited:
**EP-A- 0 315 014**
**WO-A-86/03769**
**WO-A-88/09360**
**WO-A-91/12294**
**DE-A- 4 026 200**

(73) Proprietor: **MERCK PATENT GmbH**
**Postfach,**
**Frankfurter Strasse 250**
**D-64271 Darmstadt (DE)**

(72) Inventor: **Coates, David, Dr.**
**87 Sopwith Crescent,**
**Merley**
**Wimborne,**
**Dorset BH21 3SW (GB)**
Inventor: **Marden, Shirley Ann, Dr.**
**244 Ringwood Road,**
**Parkstone**
**Poole,**
**Dorset BH14 0RS (GB)**
Inventor: **Lymer, Karl Philip, Dr.**
**Fairmead,**
**1 Horton Road,**
**Ashley Heath**
**Ringwood,**
**Hampshire, BH24 2EB (GB)**

EP 0 460 434 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to liquid crystal media (LC media) having a particularly low viscosity, a high electric resistivity and broad nematic phases.

Liquid crystal display elements (LC display elements) increasingly utilize the properties of nematic or nematic-cholesteric liquid crystal materials of significantly changing their optical properties such as light absorption, light scattering, birefringence, reflectance or colour under the influence of electric fields. The function of such display elements is based for example on the phenomena of dynamic scattering, the deformation of aligned phases, the guest-host effect, the Schadt-Helfrich effect in the twisted cell, or the cholesteric-nemtic phase transition.

The industrial application of these effects in electronic components requires liquid crystal phases which must meet a large number of requirements. Of particular importance here are the chemical resistance to moisture, air and physical factors such as heat, radiation in infrared, visible and ultraviolet region and continuous and alternating electric fields. Industrially utilizable liquid crystal media are also required to have a liquid crystal mesophase within a suitable temperature range, a very low viscosity, a suitable optical anisotropy and a high steepness of the elctro-optical characteristic. Finally, they must not have any self-absorption in the region of visible light, i.e. they must be colourless.

None of the hitherto disclosed series of compounds with a liquid crystal mesophase contain an individual compound which meets all these requirements. For that reason, the rule is to prepare mixtures of four to twenty-five (or even more) compounds in order to obtain mixtures which are usable as liquid crystal media. Usually at least one compound having a low melting and a high clear point is additionally mixed. The result is normally a mixture whose melting point is below that of the lower-melting component, while the clear point is between the clear points of the components. However, optimal media cannot be easily prepared in this way, since the components having the high melting and clear points frequently also confer on the mixtures a high viscosity. As a result the switching times of the electro-optical display elements prepared therewith are changed in an undesirable manner.

To reduce the threshold voltage, hitherto disclosed LC phases have added to them stronly polar nematic compounds having a terminal cyano group. The effective dipole moment of these compounds, however, is distinclty reduced by a more or less strong antiparallel association of these molecules, so that relatively large amounts of polar compounds need to be added. This in turn gives rise to various disadvantages, such as unfavorable elastic properties of the LC phases, and high viscosity. It is also known to add 4-cyano-3-fluorophenyl benzoates as strongly polar components in order to reduce the threshold voltage, which is explained in terms of a reduced degree of association of the cyano compounds. However, even these LC media do not meet all the abovementioned requirements at the same time. In particular, for many applications their viscosities are still too high, and, in addition, the steepnesses of the electro-optic characteristic are not sufficient for highly informative displays owing to the relatively large ratio of the elastic constants for bending ($K_3$) and spreading ($K_1$) $K_3/K_1$. The hitherto disclosed media therefore have excessively high viscosities and/or an unacceptably poor steepness of characteristic (characterized by an excessively high $K_3/K_1$) and/or high temperature dependence of the threshold voltage dV/dT and/or large angular dependence of contrast.

There is thus still a great need for liquid crystal media having relatively high clear points, low melting points, a low viscosity (and hence short switching times) and a low threshold voltage, which at the same time have favorable electro-optic steepness and excellent viewing angle characteristic combined with a birefringence suitable for use in standard display cells.

The invention has for its object to prepare liquid crystal phases which have a nematic phase within the required temperature range and are completely or almost completely free from the abovementioned disadvantages.

It has now been found that the liquid crystal phases having particularly favorable combinations of material properties, in particular an acceptable combination of threshold steepness, viscosity, nematic phase range, viewing angle and temperature dependence at a low threshold voltage are obtained when the liquid crystal medium consists essentially of a polar component A having a dielectric anisotropy $\Delta\epsilon > +2$ and a neutral component B having a dielectric anisotropy of -2 to +2, characterized in that the polar component A is based on chloro and cyano compounds of the formula I and II

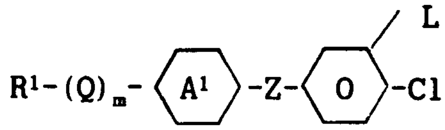

I

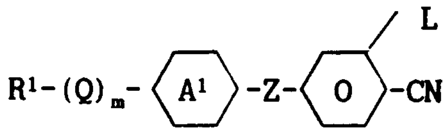

II

in which

- $R^1$ is alkyl of 1 to 12 C atoms, in which in addition one or two non-adjacent $CH_2$ groups can be replaced by O atoms, -CO-, -O-CO-, -CO-O- and/or -CH=CH- groups,
- Q is trans-1,4-Cyclohexylene (Cy), -Cy-$C_2H_4$-, 1-4,phenylene (Phe) or 3-fluoro-1,4-phenylene (PhF),
- m is 0 or 1,
- $A^1$ is Cy, Phe, PhF, 1,3-dioxane-2,5-diyl, pyrimidine-2,5-diyl or pyridine-2,5-diyl,
- Z is -CO-O-, $C_2H_4$- oder a single bond, and
- L is H or F,

whereby the total proportion of compounds of the formulae I and II is more than 45 Wt.% and the compounds of the formula I and II are contained in a weight ratio of 1:1 to 10:1.

The invention thus provides the above described liquid crystal media which may also contain one or more pleochroic dyes (guest-host systems), and the use of these media in liquid crystal displays elements.

The invention further provides liquid crystal displays elements, in particular electro-optical displays elements which contain such media.

The guest-host systems according to the invention generally contain 0.1 to 15, preferably 0.5 to 10, in particular 1 to 7, percent by weight of pleochroic dyes.

The pleochroic dyes of the guest-host system according to the invention are preferably chosen in such a way that they cover a suitable part of the visible spectrum and that the absorption in this range is more or less constant.

The media of the present invention can be devided into the following four types:

- Type 1: low $\Delta n$, low $\Delta\epsilon$
- Type 2: high $\Delta n$, low $\Delta\epsilon$
- Type 3: low $\Delta n$, high $\Delta\epsilon$
- Type 4: high $\Delta n$, high $\Delta\epsilon$

Type 1 is usually based on a mixture of two or more (preferably at least three compounds of the formula I1. This mixture simultaneously comprises compounds of the formula I1 with m = 0 and m = 1. The proportions of these compounds are selected in such a way to ensure a sufficient clearing point of the resulting mixture. Additionally used are cyano components of the formula II, preferably two or more compounds to adjust the threshold voltages.

In many case the resulting mixture requires high clearing point additives which are used in such a proportion that the clearing point is increased to the desired value. These additives are preferably selected from the group of the following four-ring compounds:

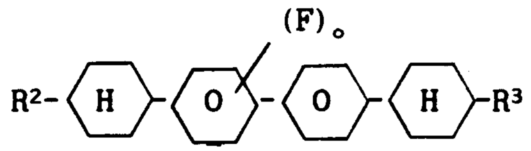

BI1

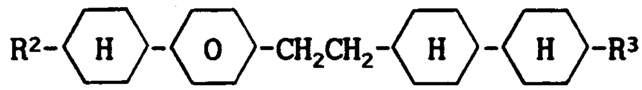

BIII1

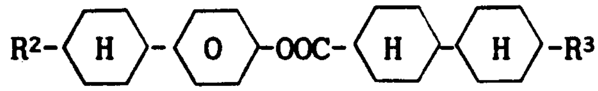

BIII2

and/or one or more compounds selected from the following group of three ring compounds

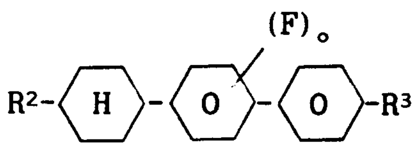

BV1

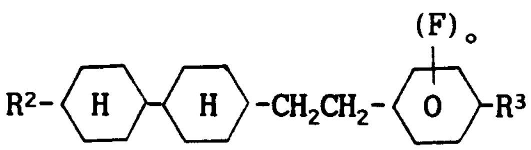

BVI1

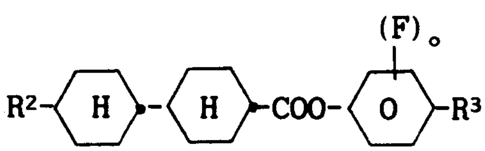

BVI2

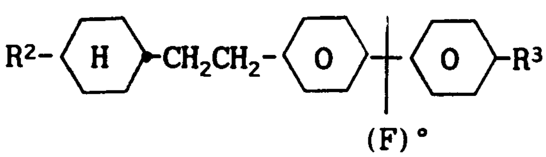

BVII1

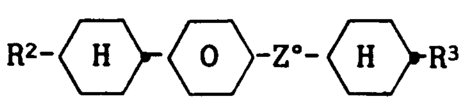

BVIII1

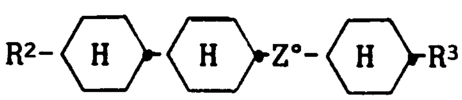

BVIII1

wherein $R^2$ and $R^3$ are defined as R1 of the compounds of the formulae I and II, Z° is -CO-O- or -O-CO- and o is 0, 1 or 2. Often also compounds with a relatively high optical birefringence Δn are added in order to adjust Δn of the mixture for the intended LC layer thickness of the display elements. A variety of tolane compound is reported in the literature which are useful in this case. Especially preferred high Δn compounds are cyanobiphenyls and those compounds of the formula I3 wherein Q denotes 1,4-phenylene or 3-fluoro-1,4-phenylene. Also advantageously used in these mixtures can be viscosity lowering components which are known to the skilled worker in a big variety.

Typical mixtures of this type are shown in examples 11 to 14.

Also type 2 is based on the same mixture of several compounds of the formula I1. As cyano compounds of the formula II preferably cyanobiphenyls are used. If necessary, the same high clearing point additives as for type 1 can be used as well as the high Δn compounds used for type 1. Preferably however, also one or more compounds of the following group are used in a sufficient amount for increasing Δn and keeping N-I high:

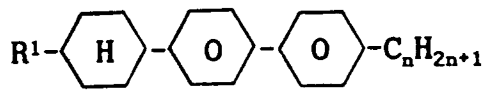

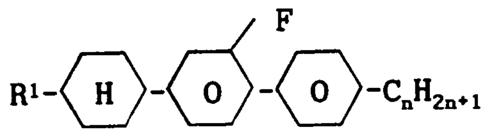

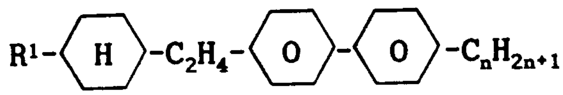

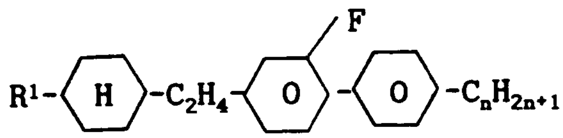

In another preferred embodiment one or more of the following compounds are used for simultaneously increasing $\epsilon_{\perp}$, N-I and Δn:

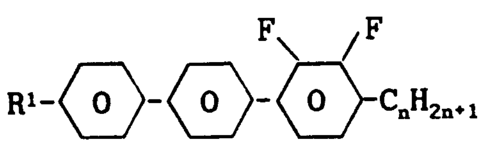

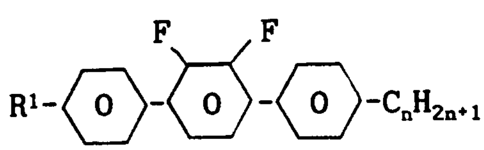

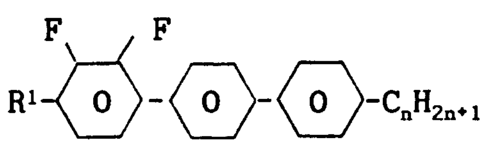

Typical mixtures of this type are shown in examples 15 and 16.

Also type 3 is based on the chloro/chloro-fluoro-host (compounds of the formula I1), cyano compounds of the formula II and - if necessary - high clearing point additives. Preferably ME-nNF are used for increasing Δε because PDX-nN does not dissolve as well as normal in the chloro/chloro-fluoro host in higher amounts.

A typical mixture of this type is shown in example 17.

Finally also type 4 is based on the chloro-/chloro-fluoro-host (compounds of the formula I1), cyano compounds of the formula II and - if necessary - high clearing point additives. Preferably these mixtures are fully based on cyanobiphenyls and optionally cyanoterphenyls as cyano components. A typical mixture is shown in example 18.

The media of the present invention preferably are based on a mixture of two or more (preferably three or more) compounds of the formula I. Preferably the proportion of these chloro compounds is at least 25 Wt.%. These compounds allow the realization of high clearing points and simultaneously low viscosities. Especially, if compounds are used wherein L denotes F also low $\Delta\epsilon/\epsilon_{\perp}$ ratios can be achieved. In high $\Delta n$ mixtures compounds of the formula I allow the realization of higher $\Delta n$ values than similar fluoro compounds.

Preferably the media of the present invention have a nematic phase range from -30° to +80° (wide range mixtures). Especially preferred are those having S/N ≦ -40° and N/I ≧ 90° (100°).

All media of the present invention allow the realization of short switching times due to this favorable viscous and elastic properties. The high $\Delta n$ type mixtures are used for operation in the 2nd or higher minima of the Gooch-Tarry curve. These media are characterized by high electrical resistivities and improved steepnesses of the electro-optical curves and are well suited for low multiplex TN.

The low $\Delta n$ media are usually used in the 1st minimum of the Gooch-Tarry curve. They show a valuable combination of broad nematic phase range, low viscosity and high $\Delta\epsilon$ which allows a reduction of the threshold voltages of approx. 20 %.

The individual compounds of the formula I and II of the liquid crystal media according to the invention are either known or preparable by methods which are easily derivable by those skilled in the art from the prior art, since they are based on standard methods described in the literature.

Corresponding compounds of the formula I are described for example in German Patent Applications P 34 05 914 and P 35 15 633; in European Patent Specification 0,019,665; in S.M. Kelly and Hp. Schad, Helvetica Chimica Acta, 67, 1580-1587 (1984); in S.M. Kelly, ibid 67, 1572-1579 (1984); in Japanese Offenlegungsschrift 59-191,789 and European Offenlegungsschriften 0,099,099 and 0,119,756. Compounds of the formula II are described for example in German Offenlegungsschriften 29 44 905, 31 12 185, 31 46 249, 31 50 761, 31 50 763, 32 07 114, 32 27 916, 33 02 218, 33 34 054, in European Offenlegungsschrift 0,122,389, in U.S. Patent 4,322,354 and in Japanese Offenlegungsschrift 56-164,179.

It was found, surprisingly, that the combination according to the invention of compounds of the formulae I and II gives LC media which on the one hand have wide nematic mesophase ranges with low melting points and low smectic-nematic transition temperatures and on the other are capable of multiplexed drive at very low supply voltage by virtue of their good electro-optic steepness, viewing angle characteristic and high dielectric anisotropy combined with very short switching times due to the favorable viscosity values.

The LC media according to the invention preferably contain at least two components, in particular at least three components, of the formula I and at least two components, in particular at least three components of the formula II.

The total proportion of the compounds of the formula I and those of formula II is preferably 50 to 85 %, in particular 60 to 80 %.

$R^1$ is preferably alkyl, alkenyl, alkoxy or alkoxymethyl in each case with 1 to 7 C atoms, in particular straight-chain alkyl or alkoxymethyl.

Preferred compounds of the formula I are those of the partial formulae I1 to I3:

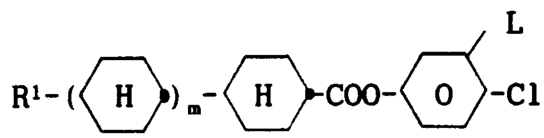

I1

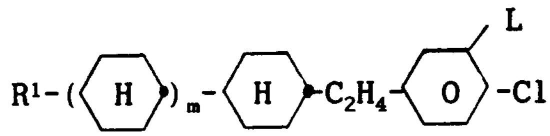

I2

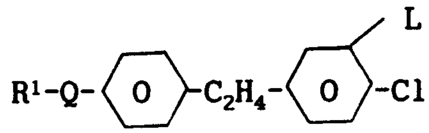

I3

Q in formula I3 preferably denotes trans-1,4-cyclohexylene or 3-fluoro-1,4-phenylene.

Preferred compounds of the formula II are those of the partial formulae II1 to II8:

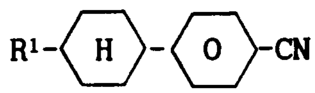

II1

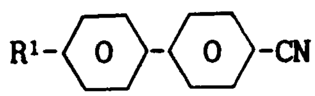

II2

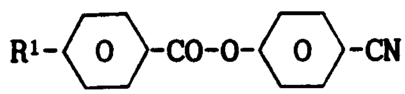

II3

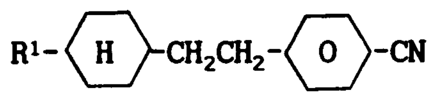

II4

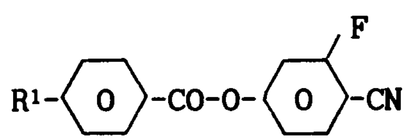

II5

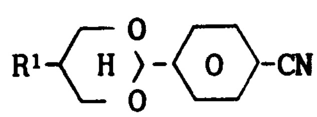

II6

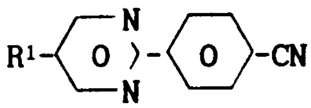

II7

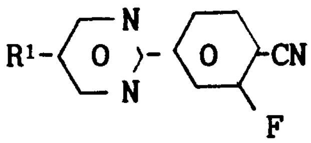

II8

In the case of the compounds of the foregoing partial formulae, $R^1$ is a straight-chain alkyl group, preferably of 1 to 7 C atoms, in which in addition a $CH_2$ group can also be replaced by -O- or -CH=CH. Particularly preferred groups R are methyl, ethyl, n-propyl, n-butyl, n-pentyl and n-heptyl.

In the case of compounds of the foregoing partial formulae B with two groups $R^2/R^3$, both groups R each have independently of each other one of the abovementioned meanings.

The preparation of the phases according to the invention is effected in the conventional manner. In general, the desired amount of the components which is used in the smaller amount is dissolved in the components which constitutes the main constituent, preferably at elevated temperature. If this temperature is chosen to be above the clear point of the main constituent, the completeness of the process of dissolving can be observed particularly easily.

However, it is also possible to mix solutions of the components in a suitable organic solvent, for example acetone, chloroform or methanol, and to remove the solvent after thorough mixing, for example by distillation under reduced pressure. It is self-evident that with this method it must be ensured that the solvent does not introduce any contaminants or undesirable dopants.

By means of suitable additives the liquid crystal phases according to the invention can be modified in such a way that they can be used in any hitherto disclosed kind of liquid crystal display element.

Such additives are known to those skilled in the art and are exhaustively described in the literature. It is possible to add for example conduction salts, preferably ethyldimethyldodecylammonium 4-hexyloxybenzoate, tetrabutylammonium tetraphenylboranate or complex salts of crown ethers (cf. for example I. Haller et al., Mol. Cryst. Liq. Cryst. volume 24, pages 249-258 (1973)) for improving the conductivity of substances for modifying the dielectric anisotropy, the viscosity and/or the orientation of the nematic phases. Such substances are described for example in German Offenlegungsschriften 22 09 127, 22 40 864, 23 21 632, 23 38 281, 24 50 088, 26 37 430, 28 53 728 and 29 02 177.

The examples below serve to illustrate the invention without limiting it. In the examples, the melting point and clear oint of a liquid crystal substance are given in degrees Celsius. The percentages are by weight. The values of the threshold voltages relate to an angle of observation of 0°, 10 % contrast and 20 °C. In the present patent application and in the following examples all chemical structures of LC compounds are given by acronyms the transformation of which into chemical formulae is done as shown in the following. All residues $C_nH_{2n+1}$ and $C_mH_{2m+1}$ are straight-chained alkyl groups with n resp. m carbon atoms. The code of Table B is self-explanatory. In Table A only the acronym for the core structure is given. In a concrete compound this acronym is followed by a dash and a code for the substituents $R^1$, $R^2$, $L^1$ and $L^2$ as follows:

| Code for $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | H | F |
| nF | $C_nH_{2n+1}$ | F | H | H |
| nOF | $OC_nH_{2n+1}$ | F | H | H |
| nCl | $C_nH_{2n+1}$ | Cl | H | H |
| nF.F | $C_nH_{2n+1}$ | F | H | F |
| nOmFF | $C_nH_{2n+1}$ | $OC_mH_{2m+1}$ | F | F |
| nmF | $C_nH_{2n+1}$ | $C_mH_{2m+1}$ | F | H |
| $nCF_3$ | $C_nH_{2n+1}$ | $CF_3$ | H | H |
| $nOCF_3$ | $C_nH_{2n+1}$ | $OCF_3$ | H | H |
| $nOCF_2$ | $C_nH_{2n+1}$ | $OCHF_2$ | H | H |
| nS | $C_nH_{2n+1}$ | NCS | H | H |
| rVsN | $C_rH_{2r+1}$-CH = CH-$C_sH_{2s}$- | CN | H | H |
| rEsN | $C_rH_{2r+1}$-O-$C_sH_{2s}$- | CN | H | H |
| nNF | $C_nH_{2n+1}$ | CN | F | H |
| nAm | $C_nH_{2n+1}$ | $COOC_mH_{2m+1}$ | H | H |
| nCl.F | $C_nH_{2n+1}$ | Cl | H | F |

Table A:

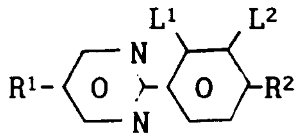

PYP

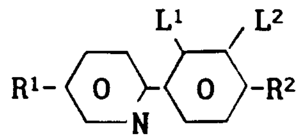

PYRP

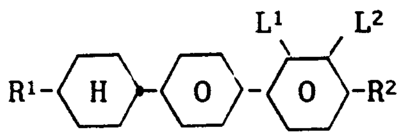

BCH

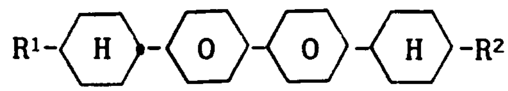

CBC

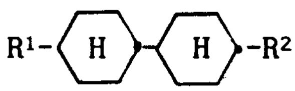

CCH

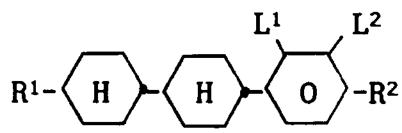

CCP

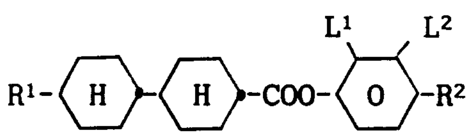

CP

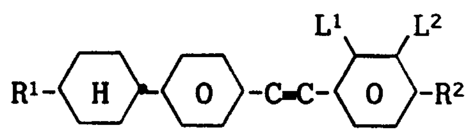

CPTP

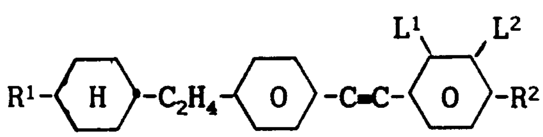

CEPTP

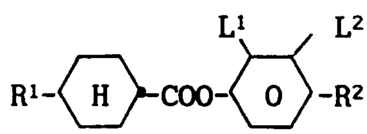

D

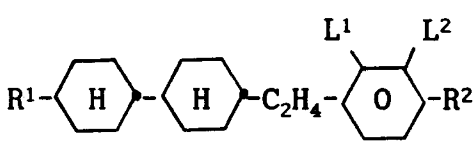

ECCP

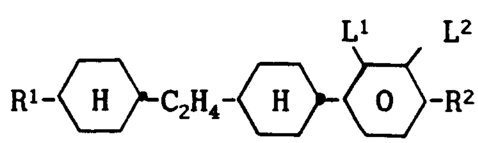

CECP

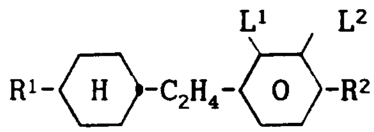

EPCH

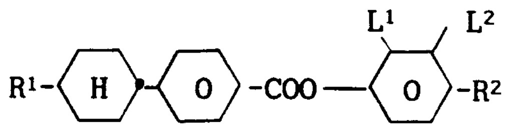

HP

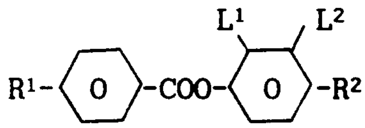

ME

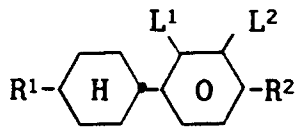

PCH

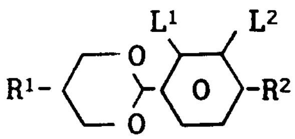

PDX

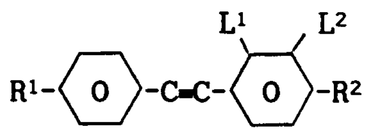

PTP

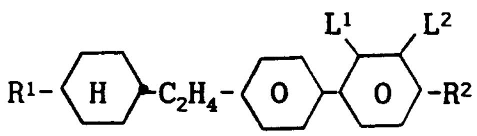

BECH

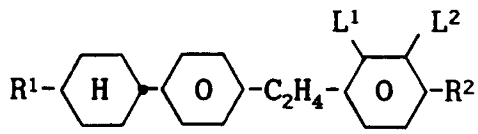

EBCH

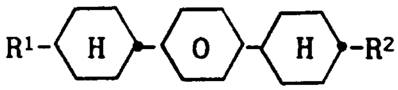

CPC

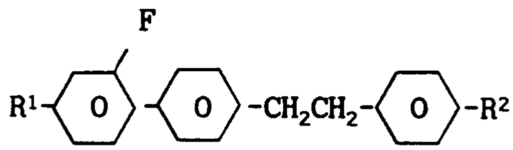

FET

Table B:

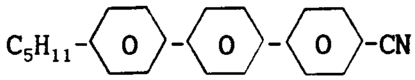

T15

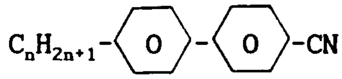

K3n

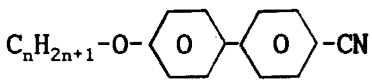

M3n

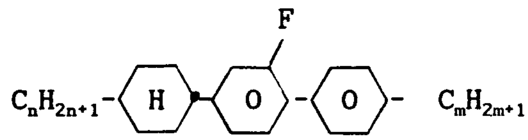

BCH-n.Fm

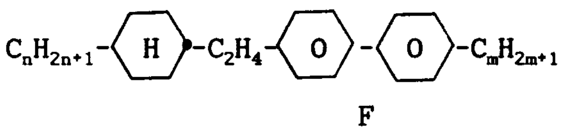

Inm

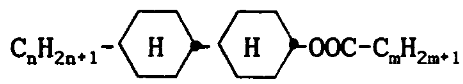

C-nm

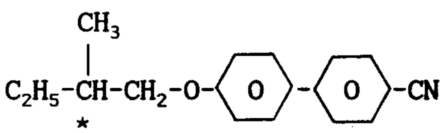

C15

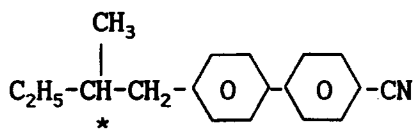

CB15

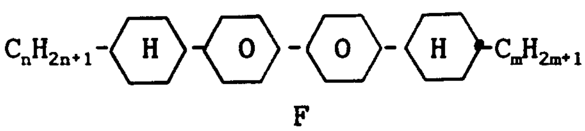

CBC-nmF

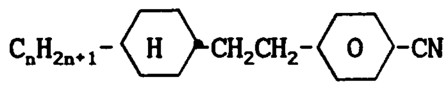

G3n

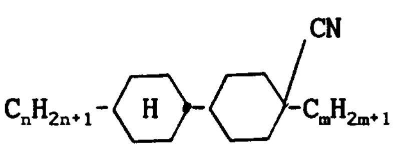

CCN-nm

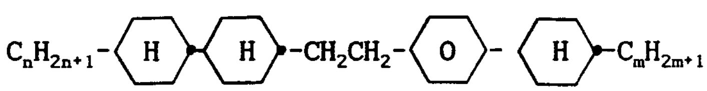

CCEPC-nm

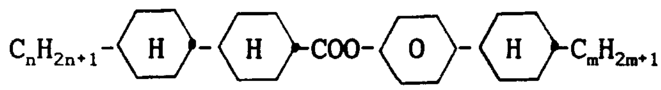

CCPC-nm

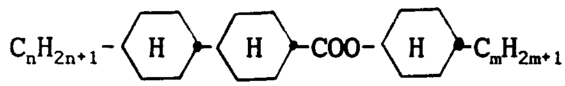

CH-nm

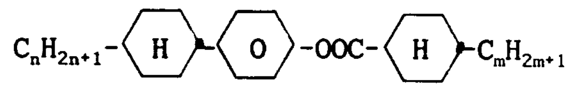

HD-nm

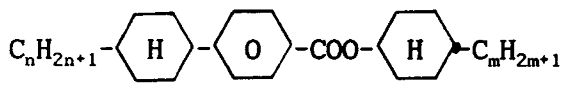

HH-nm

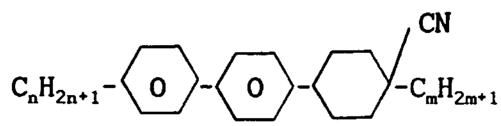

NCB-nm

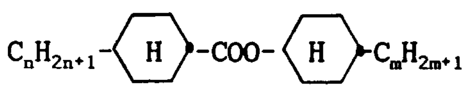

OS-nm

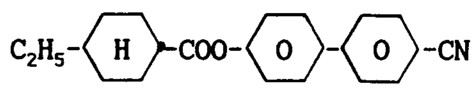

CHE

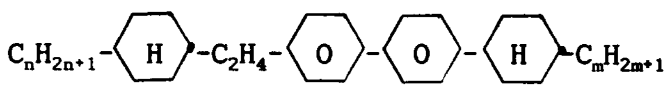

ECBC-nm

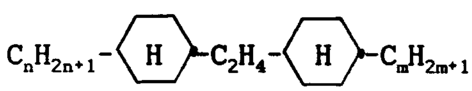

ECCH-nm

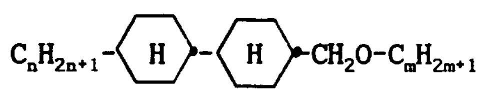

CCH-n1Em

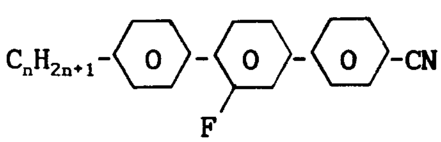

T-nFN

$Cl_{eu}$ is a mixture consisting of

23.5 % of D-3Cl,
26.3 % of D-5Cl,
27.0 % of CP-3Cl and
23.2 % of CP-5Cl.

$CL.F_{eu}$ is a mixture consisting of

22.50 % of D-3Cl.F,
22.50 % of D-5Cl.F,
30.25 % of CP-3Cl.F
24.75 % of CP-5Cl.F.

$I_{eu}$ is a mixture consisting of

33.3 % of I-32,
33.3 % of I-52
33.3 % of I-35

Example 1

| | | | |
|---|---|---|---|
| CP-3CL.F | 7.56 % | N-I | 84.2 °C |
| CP-5CL.F | 8.73 | Δn | 0.1673 |
| FET-3CL | 16.16 | Δε | 8.34 |
| FET-5CL | 26.55 | visc | 25.6 cSt |
| K6 | 6 | | |
| K15 | 12 | | |
| CCH-303 | 10 | | |
| CCEPC-33 | 5 | | |
| CBC-33 | 3 | | |
| PCH-302 | 5 | | |

Example 2

| | | | |
|---|---|---|---|
| FET-3CL | 9.45 % | N-I | 83.2 °C |
| FET-5CL | 16.36 | Δn | 0.154 |
| EBCH-5CL | 15.35 | Δε | 7.74 |
| ECCP-5CL.F | 17.84 | visc | 21.2 cSt |
| K6 | 8 | | |
| K15 | 12 | | |
| CCH-303 | 8 | | |
| CBC-33 | 3 | | |
| PCH-302 | 10 | | |

Example 3

| | | | |
|---|---|---|---|
| CP-5Cl.F | 3.78 % | N-I | 74 °C |
| FET-3CL | 7.95 | Δn | 0.1681 |
| FET-5CL | 13.55 | Δε | 9.98 |
| D-5CL.F | 9.96 | visc | 25.4 cSt |
| EBCH-3CL | 4.76 | | |
| K6 | 8 | | |
| K9 | 8 | | |
| CCH-303 | 7.5 | | |
| CBC-33 | 4 | | |
| PCH-53 | 4 | | |
| ECCP-5CL.F | 12 | | |

Example 4

| | | | |
|---|---|---|---|
| CP-5CL | 3.78 % | N-I | 84.0 °C |
| FET-3CL | 7.95 | Δn | 0.167 |
| FET-5CL | 13.55 | Δε | 9.48 |
| D-5CL.F | 9.96 | visc | 24.58 cSt |
| ECCP-5CL.F | 4.76 | | |
| K6 | 8 | | |
| K9 | 8 | | |
| K15 | 12 | | |
| CCH-303 | 8 | | |
| CCEPC-33 | 4 | | |
| CBC-33 | 4 | | |
| EBCH-3CL | 7 | | |

Examples 1 to 4 represent wide range 2nd minimum mixture.

Example 5

| | | | |
|---|---|---|---|
| EPCH-3CL | 10 % | N-I | 96 °C |
| EPCH-5CL | 9 | Δn | 0.088 |
| ECCP-3CL.F | 13 | Δε | 4.02 |
| ECCP-3CL | 13 | visc | 18.5 cSt |
| CP-3CL | 6 | | |
| CCH-303 | 25 | | |
| CCEPC-33 | 10 | | |
| PDX-3 | 4 | | |
| PDX-4 | 5 | | |
| CCPC-33 | 5 | | |

Example 6

| | | | |
|---|---|---|---|
| PCH-3Cl | 10 % | N-I | 95 °C |
| PCH-5Cl | 9 | Δn | 0.09 |
| ECCP-3F.F | 13 | Δε | 3.85 |
| ECCP-3Cl | 13 | visc | 18.0 cSt |
| CP-3Cl.F | 6 | | |
| CCH-303 | 25 | | |
| PDX-3 | 4 | | |
| PDX-4 | 5 | | |
| CCPC-33 | 5 | | |
| CCPC-34 | 5 | | |
| CCPC-35 | 5 | | |

Example 7

| | | | |
|---|---|---|---|
| CP-3CL.F | 3.78 % | N-I | 106.2 °C |
| CP-5CL.F | 7.95 | Δn | 0.0967 |
| D-3CL.F | 13.55 | Δε | 4.88 |
| D-5CL.F | 9.96 | visc | 21 cSt |
| CP-3CL | 4.76 | | |
| CCH-303 | 8 | | |
| CCEPC-33 | 8 | | |
| PDX-3 | 7.5 | | |
| PDX-4 | 4 | | |
| CCPC-33 | 4 | | |

Example 8

| | | | |
|---|---|---|---|
| CP-3CL.F | 6.05 % | N-I | 95 °C |
| CP-5CL.F | 4.95 | Δn | 0.124 |
| D-3CL.F | 4.5 | Δε | 6.4 |
| D-5CL.F | 4.5 | visc | 21.3 cSt |
| FET-5CL | 25 | | |
| CP-3CL | 6 | | |
| CCH-303 | 25 | | |
| CCEPC-33 | 10 | | |
| K6 | 6 | | |
| PYP-3NF | 3 | | |
| CCPC-33 | 5 | | |

Example 9

| | | | |
|---|---|---|---|
| CP-3CL.F | 12.1 | N-I | 114.9 °C |
| CP-5CL.F | 9.9 | Δn | 0.107 |
| D-3CL.F | 9.0 | Δε | 6.7 |
| D-5CL.F | 9.0 | visc | 30.4 cSt |
| CP-55F | 30 | | |
| CP-35F | 10 | | |
| CP-33F | 10 | | |
| PCH-3 | 10 | | |
| PCH-5 | 10 | | |
| CBC-53 | 5.0 | | |

Example 10

| | | | |
|---|---|---|---|
| CP-3CL.F | 12.1 | N-I | 94.2 °C |
| CP-5CL.F | 9.9 | Δn | 0.103 |
| D-3CL.F | 9.0 | Δε | 6.5 |
| D-5CL.F | 9.0 | visc | 25.9 cSt |
| CP-55F | 7.0 | | |
| CP-35F | 7.05 | | |
| CP-33F | 8.0 | | |
| PCH-3 | 15.0 | | |
| PCH-5 | 13.0 | | |
| CBC-53 | 2.0 | | |
| D-35 | 8.0 | | |

Examples 3 to 10 represent wide range 1st minimum mixtures.

Example 11

| | | | |
|---|---|---|---|
| Cl.Feu | 12.1 | N-I | 81 °C |
| CCH-303 | 9.9 | Δn | 0.111 |
| G6 | 9.0 | Δε | 9.0 |
| G9 | 9.0 | visc | 23.6 cSt |
| PDX-3 | 30 | | |
| ME-2NF | 10 | | |
| CCPC-33 | 10 | | |
| CBC-33F | 10 | | |
| CBC-35F | 10 | | |
| K9 | 5.0 | | |

Example 12

| | | | |
|---|---|---|---|
| Cl.Feu | 25 % | N-I | 86 °C |
| ECCP-3ClF | 10 | Δn | 0.120 |
| ECCP-5ClF | 5 | Δε | 7.6 |
| CCH-303 | 10 | visc | 21.5 cSt |
| G9 | 15 | | |
| G6 | 5 | | |
| K6 | 10 | | |
| BEP-15F | 10 | | |
| CCPC-33 | 10 | | |

Example 13

| | | | |
|---|---|---|---|
| Cl.Feu | 12.1 | N-I | 82 °C |
| ECCP-3ClF | 9.9 | Δn | 0.13 |
| CCH-303 | 9.0 | Δε | 8.85 |
| G9 | 9.0 | $\Delta\epsilon/\epsilon_\perp$ | 1.95 |
| PCH-3 | 30 | η20 | 21.8 cSt |
| K6 | 10 | | |
| I-32 | 10 | | |
| CCEPC-33 | 10 | | |
| ME3NF | 10 | | |
| FET-5Cl | 10 | | |

Example 14

| | | | |
|---|---|---|---|
| Cl.Feu | 40.05 % | N-I | 95.6 °C |
| CCH-303 | 10.0 | Δn | 0.122 |
| K6 | 9.99 | Δε | 7.66 |
| G9 | 9.01 | Δε/ε⊥ | 1.626 |
| PDX-3 | 3.97 | η20 | 23.6 cSt |
| CCEPC-33 | 9.97 | | |
| CCPC-33 | 5.00 | | |
| CBC-53 | 2.98 | | |
| FET-5Cl | 9.01 | | |

Example 15

| | | | |
|---|---|---|---|
| Cl.Feu | 25 % | N-I | 88 °C |
| Ieu | 20 | Δn | 0.168 |
| K6 | 8 | Δε | 6.9 |
| K15 | 10 | Δε/ε⊥ | 1.55 |
| FET-51 | 10 | visc. | 32 cSt |
| T32FF | 8 | | |
| CCEPC-33 | 7 | | |
| FET-5Cl | 12 | | |

Example 16

| | | | |
|---|---|---|---|
| Ieu | 26.99 % | N-I | 96 °C |
| K6 | 13.99 | Δn | 0.1759 |
| K9 | 10.03 | Δε | 9.74 |
| K15 | 13.98 | Δε/ε⊥ | 2.29 |
| CBC-33F | 5.0 | visc. | 29.4 cSt |
| CBC-53F | 5.0 | | |
| ECCP-3Cl.F | 12.5 | | |
| ECCP-5Cl.F | 12.5 | | |

Example 17

| | | | |
|---|---|---|---|
| Cl.Feu | 30 | N-I | 81.2 °C |
| G9 | 10 | Δn | 0.118 |
| PDX-2 | 6 | Δε | 15.96 |
| PDX-3 | 12 | ε⊥ | 7.37 |
| ME-2NF | 5 | Δε/ε⊥ | 2.16 |
| ME-3NF | 4 | visc. | 32 |
| CBC-33F | 5 | | |
| CBC-53F | 5 | | |
| CBC-55F | 5 | | |
| CBC-33 | 5 | | |
| CCH-303 | 8 | | |
| G6 | 5 | | |

Example 18

| | | | |
|---|---|---|---|
| Cl.Feu | 46.99 % | N-I | 83.4 °C |
| K6 | 13.99 | Δn | 0.169 |
| K9 | 10.03 | Δε | 13.58 |
| K15 | 13.98 | ε⊥ | 6.39 |
| CBC-33F | 5.00 | Δε/ε⊥ | 2.12 |
| CBC-53F | 5.00 | visc. | 29.8 |
| T15 | 5.00 | | |
| | | Steepness | 2.14 |

Example 19

| | | | |
|---|---|---|---|
| G9 | 19.8 % | N-I | 85.7 °C |
| PDX-2 | 5.97 | visc. | 37.4 cSt |
| PDX-3 | 11.87 | Δn | 13.5 |
| PDX-4 | 8.42 | Δε | 17.6 |
| ME-2NF | 7.42 | ε⊥ | 6.7 |
| ME-3NF | 5.45 | ε‖ | 24.3 |
| D-3Cl | 7.92 | Δε/ε⊥ | 2.63 |
| CP-3Cl | 12.92 | | |
| CBC-33F | 4.9 | | |
| CBC-53F | 5.45 | | |
| CBC-55F | 4.95 | | |
| CBC-33 | 4.95 | | |

## Claims

**1.** A liquid crystal medium consisting essentially of a polar component A having a dielectric anisotropy Δε > +2 and a neutral component B having a dielectric anisotropy of -2 to +2, characterized in that the polar component A is based on chloro and cyano compounds of the formula I and II

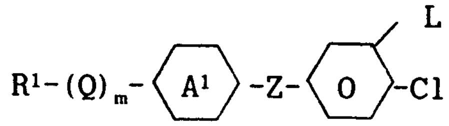

I

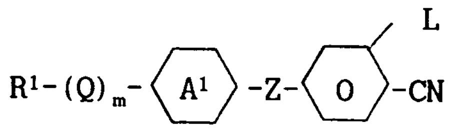

II

in which

- $R^1$ is alkyl of 1 to 12 C atoms, in which in addition one or two non-adjacent $CH_2$ groups can be replaced by O atoms, -CO-, -O-CO-, -CO-O- and/or -CH=CH- groups,
- Q is trans-1,4-Cyclohexylene (Cy), -Cy-$C_2H_4$-, 1-4,phenylene (Phe) or 3-fluoro-1,4-phenylene (PhF),
- m is 0 or 1,
- $A^1$ is Cy, Phe, PhF, 1,3-dioxane-2,5-diyl, pyrimidine-2,5-diyl or pyridine-2,5-diyl,
- Z is -CO-O-, $C_2H_4$- or a single bond, and
- L is H or F,

whereby the total proportion of compounds of the formulae I and II is more than 45 Wt.% and the compounds of the formula I and II are contained in a weight ratio of 1:1 to 10:1
with the proviso that compounds of formula I, wherein
Z is -CO-O-, and
L is H
are excluded.

**2.** A liquid crystal medium according to claim 1, wherein said polar component A comprises one or more compounds selected from the group consisting of I1 and I2

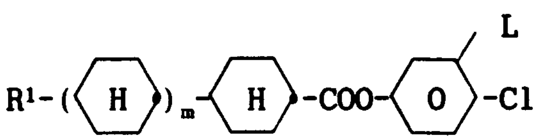

I1

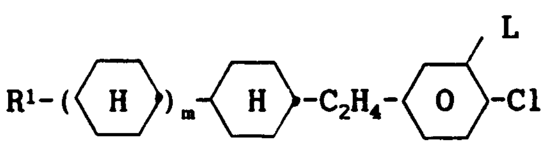

I2

**3.** A liquid crystal medium according to one of the claims 1 and 2, wherein said polar component A comprises one or more compounds of the formula I3

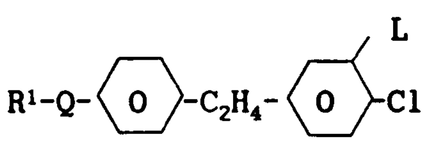

I3

**4.** Use of a liquid crystal medium according to claim 1, for electro-optical display elements.

**5.** Electro-optical display element, characterized in that it contains a medium according to claim 1.

**Patentansprüche**

**1.** Flüssigkristallmedium, das im wesentlichen aus einer polaren Komponente A mit einer dielektrischen Anisotropie $\Delta\epsilon > +2$ und einer neutralen Komponente B mit einer dielektrischen Anisotropie von -2 bis +2 besteht, dadurch gekennzeichnet, daß die polare Komponente A auf Chlor- und Cyanverbindungen der Formeln I und II beruht

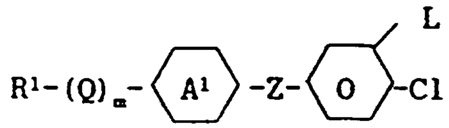

I

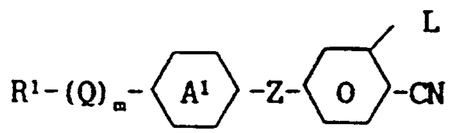

II

worin

| | |
|---|---|
| $R^1$ | Alkyl mit 1 bis 12 C-Atomen, worin eine oder zwei nicht benachbarte $CH_2$-Gruppen zusätzlich durch O-Atome, -CO-, -O-CO-, -CO-O- und/oder -CH=CH-Gruppen ersetzt sein können, |
| Q | trans-1,4-Cyclohexylen (Cy), -Cy-$C_2H_4$-, 1,4-Phenylen (Phe) oder 3-Fluor-1,4-phenylen (PhF), |
| m | 0 oder 1, |
| $A^1$ | Cy, Phe, PhF, 1,3-Dioxan-2,5-diyl, Pyrimidin-2,5-diyl oder Pyridin-2,5-diyl, |
| Z | -CO-O-, $C_2H_4$- oder eine Einfachbindung und |
| L | H oder F bedeuten, |

wobei der Gesamtanteil der Verbindungen der Formeln I und II mehr als 45 Gew.-% beträgt und die Verbindungen der Formeln I und II in einem Gewichtsverhältnis von 1:1 bis 10:1 enthalten sind,
mit der Maßgabe, daß Verbindungen der Formel I, worin
Z -CO-O- und
L H bedeuten,
ausgeschlossen sind.

**2.** Flüssigkristallmedium nach Anspruch 1, wobei die polare Komponente A eine oder mehrere Verbindungen enthält, die aus der Gruppe bestehend aus I1 und I2 ausgewählt sind:

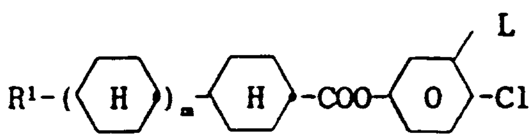

I1

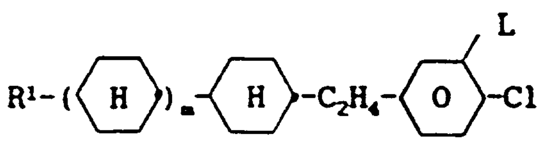

I2

**3.** Flüssigkristallmedium, nach einem der Ansprüche 1 und 2, wobei die polare Komponente A eine oder mehrer Verbindungen der Formel I3 enthält:

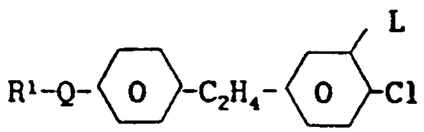

I3

4. Verwendung eines Flüssigkristallmediums nach Anspruch 1 für elektrooptische Anzeigeelemente.

5. Elektrooptisches Anzeigeelement, dadurch gekennzeichnet, daß es ein Medium nach Anspruch 1 enthält.

## Revendications

1. Milieu de cristaux liquides consistant essentiellement en un composant polaire A ayant une anisotropie diélectrique $\Delta\epsilon > +2$ et en un composant neutre B ayant une anisotropie diélectrique de -2 à +2, caractérisé en ce que le composant polaire A est à base de composés chloro et cyano de formules I et II

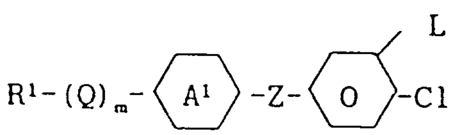

I

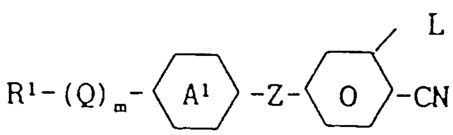

II

dans lesquelles

- $R^1$ est un radical de 1 à 12 atomes de carbone, dans lequel en outre un ou deux groupes $CH_2$ non adjacents peuvent être remplacés par des atomes d'oxygène, des groupes -CO-, -O-CO-, -CO-O- et/ou -CH=CH-,
- Q est le trans-1,4-Cyclohexylène (Cy), le -Cy-$C_2H_4$-, le 1-4,phénylène (Phe) ou le 3-fluoro-1,4-phénylène (PhF),
- m est: 0 ou 1,
- $A^1$ est: Cy, Phe, PhF, 1,3-dioxane-2,5-diyl, pyrimidine-2,5-diyl ou pyridine-2,5-diyl,
- Z est: -CO-O-, $C_2H_4$-, ou une liaison simple, et
- L est H ou F,

la proportion totale des composés des formules I et II étant supérieure à 45% en poids, et les composés des formules I et II étant compris dans un rapport de poids de 1:1 à 10:1,
avec la condition que les composés de formule I, dans lesquels
Z est -CO-O-, et
L est H
sont exclus.

2. Milieu de cristaux liquides selon la revendication 1, dans lequel ledit composant polaire A comprend un ou plusieurs composés choisis dans le groupe constitué de I1 et I2

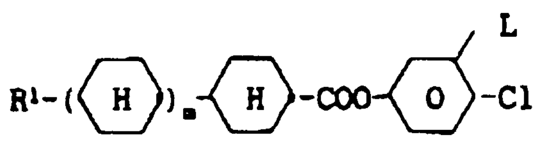

I1

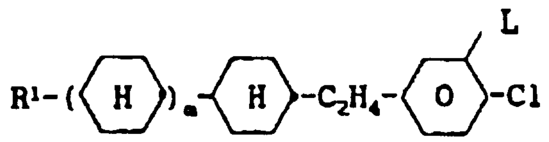

I2

3. Milieu de cristaux liquides selon l'une des revendications 1 et 2, dans lequel ledit composant polaire A comprend un ou plusieurs composés de formule I3

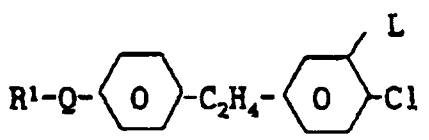

I3

4. Utilisation d'un milieu de cristaux liquides selon la revendication 1, pour des éléments d'affichage électro-optiques.

5. Élément d'affichage électro-optique, caractérisé en ce qui contient un milieu selon la revendication 1.